# EUROPEAN PATENT SPECIFICATION

(11) **EP 3 637 696 B1**
(45) Date of publication and mention of the grant of the patent: **30.12.2020**
(21) Application number: 19211269.6
(22) Date of filing: 06.06.2013
(51) Int. Cl.: H04L 12/58

(54) **COMMUNICATION METHOD, APPARATUS AND SYSTEM FOR MOBILE DEVICES**
KOMMUNIKATIONSSYSTEM, VORRICHTUNG UND KOMMUNIKATIONSVERFAHREN FÜR EINE MOBILE VORRICHTUNG
PROCÉDÉ DE COMMUNICATION DE DISPOSITIFS MOBILES, APPAREIL ET SYSTÈME DE COMMUNICATION

(30) Priority: 20.06.2012 CN 201210205224
(43) Date of publication of application: 15.04.2020
(62) Document number(s) of the earlier application(s) in accordance with Art. 76 EPC: 13807524.7 / 2 866 425
(73) Proprietor: Tencent Technology (Shenzhen) Company Limited, Guangdong 518000 (CN)
(72) Inventor: HUANG, Yaode, Futian District, Shenzhen City, Guangdong 518000 (CN); CHEN, Lin, Futian District, Shenzhen City, Guangdong 518000 (CN); JIANG, Peng, Futian District, Shenzhen City, Guangdong 518000 (CN)
(74) Representative: Gunzelmann, Rainer

(56) References cited:
- WO-A1-2006/013363
- CN-A- 102 387 241

## Description

### FIELD OF THE INVENTION

The invention relates to the field of communication technology, and particularly, to a communication method, apparatus and system for mobile devices.

### BACKGROUND

As the development of communication technology, mobile devices such as mobile phones and tablets etc. have more and more functions. A user not only can dial telephone numbers, make voice calls and send text messages with a mobile device; but also can make text, image, emoticon communication through chat tools within the mobile device. Currently, when communicating through a mobile device, if text communication is needed to be realized, then an input method may be opened firstly to input characters such as Pinyin so as to obtain words to which the Pinyin corresponds, from where the needed word input is then selected; and if emoticon communication is needed to be realized, then a pre-saved emoticon set may be opened, from where corresponding emoticons are selected for input.

However, in procedure of realizing the present invention, the inventor found that: when making a call through a mobile device, if text communication is needed to be realized, then a user has to make plurality of steps (e.g., opening, selecting, inputting, etc), calling operation of a mobile device is complex, and communication efficiency of a mobile device is low.

CN 102387241 B concerns a mobile terminal and a transmission processing method thereof. The mobile terminal comprises a shell, a motion sensing unit, a judging unit, a first generating unit and a first transmitting unit, wherein the motion sensing unit is arranged inside the shell and is used for collecting motion data of the mobile terminal; the judging unit is connected with the motion sensing unit and is used for judging whether the mobile terminal has a preset movement according to the motion data collected by the motion sensing unit so as to acquire a judgment result; the first generating unit is connected with the judging unit and is used for instructing the mobile terminal to generate a first order according to the judgment result; and the first transmitting unit is connected with the first generating unit and is used for transmitting the first order to a communication opposite end, and the communication opposite end executes a shaking operation according to the first order

WO 2006013363 A1 concerns a mobile telecommunications network with mobile terminals including motion sensors and pressure sensors. Movement and/or pressure applied to a mobile terminal can be sensed by these sensors and converted into an electrical signal. This electrical signal is encoded and transmitted to the network core. The network core generates a message to a recipient mobile terminal having a movement enabler and/or pressure enabler. When the message is received by the receiving mobile terminal, the movement and/or pressure enabler generate an approximation of the touch input generated at the sending mobile terminal.

### SUMMARY OF THE INVENTION

The present invention is defined in the independent claims. Preferable features of the present invention are defined in the dependent claims.

The technical solutions are as follows:
A communication method for mobile devices, comprising: obtaining additional instruction information corresponding to a first user operation on a first mobile device by sensing the first user operation, the first user operation comprising a voice-activated operation or a one-step operation, obtaining encoding information corresponding to the additional instruction information, by inquiring pre-stored first correspondence between additional instruction information and encoding information of additional instruction information; and transmitting the obtained encoding information to a second mobile device, enabling the second mobile device to notify a second user of the second mobile device of the first user operation based on the obtained encoding information, wherein when the additional instruction information is an emoticon, encoding of the emoticon is set to be different with encodings of emoticons in existing chat tools, by defining a new set of emoticon fields and establishing a new set of correspondence between the emoticon and the encoding of the emoticon to define a marker start byte; and wherein the marker start byte is an invisible byte to avoid a user from inputting an identical byte
A communication apparatus for mobile devices comprising: an acquisition module for obtaining additional instruction information corresponding to a first user operation on a first mobile device by sensing the first user operation, the first user operation comprising a voice-activated operation or a one-step operation, a first querying unit for obtaining encoding information corresponding to the additional instruction information, by inquiring pre-stored first correspondence between additional instruction information and encoding information of additional instruction information; and a transmitting unit for transmitting the obtained encoding information to a second mobile device, enabling the second mobile device to notify a second user of the second mobile device of the first user operation based on the obtained encoding information, wherein when the additional instruction information is an emoticon, encoding of the emoticon is set to be different with encodings of emoticons in existing chat tools, by defining a new set of emoticon fields and establishing a new set of correspondence between the emoticon and the encoding of the emoticon to define a marker start byte; and wherein the marker start byte is an invisible byte to avoid a user from inputting an identical byte.
A recording medium readable by a computer and having recorded thereon a computer program including instructions for executing the steps of the above-mentioned communication method for mobile devices.

The technical solution provided by the embodiments of the invention at least has the following benefits.

It may obtain additional instruction information that corresponds to a first user operation during communication by sensing the first user operation; transmit the additional instruction information to a second mobile device, such that only a voice-activated operation or a one-step operation is needed to be perform on the mobile device to obtain the additional instruction information; it does not need a user to open selections for input, it operations are simple and convenient and may improve communication efficiency of mobile devices.

### DESCRIPTION OF THE DRAWINGS

In order to describe the technical solutions of the invention apparently, the invention will be further illustrated in brief in connection with accompanying figures hereinafter. It should be appreciated that the figures described herein are only some embodiments of the invention, and a person skilled in the art may obtain other figures based on these ones without any creative effort being paid.
Fig. 1 is a flow diagram of a communication method for mobile devices provided by embodiment 1 of the present application;
Fig. 2 is a flow diagram of a communication method for mobile devices provided by embodiment 2 of the present application;
Fig. 3 is a structure schematic diagram of a communication apparatus for mobile devices provided by embodiment 3 of the present application; and
Fig. 4 is a structure schematic diagram of a communication system for mobile devices provided by embodiment 4 of the present application.

### DETAILED DESCRIPTION

In order to make the objects, technical solutions and advantages of the invention more apparent, the invention will be further illustrated in details in connection with accompanying figures and embodiments hereinafter. The invention is defined in the independent claims, embodiments not relating to the use of emoticons are not part of the claimed invention.

### Embodiment 1

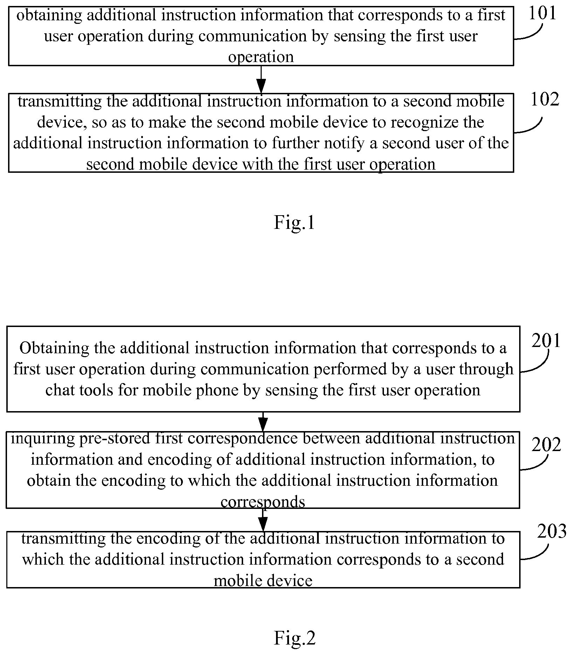

See Fig.1, embodiment of the present invention provides a communication method for mobile devices.

At step S101, additional instruction information that corresponds to a first user operation is obtained during communication by sensing the first user operation; the first user operation comprises at least one of a voice-activated operation or a one-step operation on a first mobile device.

At step S102, the additional instruction information is transmitted to a second mobile device, so that the second mobile device recognizes the additional instruction information to further notify a second user of the second mobile device of the first user operation.

Further, transmitting the additional instruction information to the second mobile device comprises:
inquiring pre-stored first correspondence between additional instruction information and encoding information of additional instruction information, to obtain the encoding information to which the additional instruction information corresponds;
transmitting the encoding information of the additional instruction information to the second mobile device.

Accordingly, recognizing, by the second mobile device, the additional instruction information to further notify a second user of the second mobile device of the first user operation comprises:
receiving, by the second mobile device, the encoding information of the additional instruction information
inquiring, by the second mobile device, pre-stored second correspondence between additional instruction information and encoding information of additional instruction information, to obtain the encoding information to which the additional instruction information corresponds;
recognizing, by the second mobile device, the additional instruction information to further notify a second user of the second mobile device of the first user operation.

Further, the one-step operation on the first mobile device comprises:
a one-step operation on a screen of the first mobile device, or
a one-step operation on the first mobile device itself.

The communication method for mobile devices described in embodiments of the invention may obtain additional instruction information that corresponds to a first user operation during communication by sensing the first user operation; transmit the additional instruction information to a second mobile device, such that only a voice-activated operation or a one-step operation is needed to be perform on the mobile device to obtain the additional instruction information; it does not need a user to open selections for input, it operations are simple and convenient and may improve communication efficiency of mobile devices. By inquiring pre-stored first correspondence between additional instruction information and encoding information of additional instruction information, the additional instruction information is transmitted to the second mobile device in manner of its encoding, its implementation is simple and convenient and may further improve communication efficiency of mobile devices.

The communication method for mobile devices described in embodiments of the invention may be applied to various mobile devices such as mobile phones. Next it would be further described by taking a chat tool applied to a mobile phone as an example.

### Embodiment 2

See Fig.2, embodiment of the present invention provides a communication method for mobile devices.

At step S201, additional instruction information that corresponds to a first user operation is obtained during communication performed by a user through chat tools for mobile phone by sensing the first user operation; the first user operation comprises at least one of a voice-activated operation or a one-step operation on a first mobile device.

Wherein the one-step operation on the first mobile device comprises a one-step operation on a screen of the mobile phone or a one-step operation on the mobile phone itself; such as knocking on screen of a mobile phone, kissing on screen of a mobile phone, shaking a mobile phone itself and etc. For additional instruction information that corresponds to the first user operation, specifically, additional instruction information (including text, emoticon, or image, etc) to which each kind of user operation corresponds may be pre-set; for example, an operation of knocking on screen of a mobile phone may be set to correspond to a ringtone of knocking (or doorbell), an operation of kissing on screen of a mobile phone may be set to correspond to a an emoticon of kissing, an operation of shaking a mobile phone itself may be set to correspond to a an effect of vibration, and so on. A correspondence is established between user operations and additional instruction information, further, the correspondence between user operations and additional instruction information may be specifically stored in manner of form or data set, which would not be further defined herein.

It should be noted that in procedure of realizing the present invention, when making a call through a mobile device, if text, image or emoticon communication is needed to be realized, then a user has to make plurality of steps. In contrary, a user only needs knock on screen of a mobile phone, kiss on screen of a mobile phone, or shake a mobile phone itself to realize text, image or emoticon communication. For the convenience of distinguishing operations to mobile devices in the invention from those in the prior art, an operation on a mobile device in the prior art (such as opening, selecting and inputting) are referred to as a multi-steps operation, and an operation on a mobile device in the invention are referred to as a one-step operation.

Additional instruction information that corresponds to a first user operation is obtained by sensing the first user operation, specifically; it may be implemented by technology of Multi-Touch, gravity sensing, light sensing, airflow sensing and other technologies. For example, an operation of knocking on screen of a mobile phone may be sensed by technology of Multi-Touch, an operation of kissing on screen of a mobile phone may be sensed by technology of airflow sensing, an operation of shaking a mobile phone itself may be sensed by technology of gravity sensing.

At step S202, pre-stored first correspondence between additional instruction information and encoding information of additional instruction information is inquired, to obtain the encoding information to which the additional instruction information corresponds.

Specifically, encoding information of additional instruction information to which each kind of additional instruction information corresponds may be pre-set; for example, encoding of a ringtone of knocking (or doorbell) may be set as 1001, encoding of an emoticon of kissing may be set as 1002, and so on. Further, the correspondence between encoding information of additional instruction information and additional instruction information may be specifically stored in manner of form or data set, which would not be further defined herein.

It should be illustrated that when the additional instruction information obtained by a method of the invention is an emoticon, then in order to distinguish it from emoticons in the existing chat tools (may be referred to as "normal emoticons"), encodings of emoticons obtained by a method of the invention (may be referred to as "special emoticons") are set to be different with encodings of emoticons in the existing chat tools. Specifically, a new set of special emoticons fields may be defined, for example, emoticons in the existing chat tools starts with bytes of 0x14, then special emoticons may define new start bytes; establish a set of special correspondence between special emoticons and encodings to define a marker start byte (usually an invisible byte to avoid a user from inputting an identical byte).

It should be also illustrated that the first correspondence between encoding information of additional instruction information and additional instruction information may be stored in the first mobile device directly, or it may be stored in a server, no definition would be made herein. According to different storage locations of correspondence between encoding information of additional instruction information and additional instruction information, optionally, inquiring pre-stored first correspondence between additional instruction information and encoding information of additional instruction information, to obtain the encoding information to which the additional instruction information corresponds, comprising: locally inquiring pre-stored first correspondence between additional instruction information and encoding information of additional instruction information, to obtain the encoding information to which the additional instruction information corresponds, or inquiring a first server for pre-stored first correspondence between additional instruction information and encoding information of additional instruction information, to obtain the encoding information to which the additional instruction information corresponds.

At step S203, the encoding information of the additional instruction information to which the additional instruction information corresponds is transmitted to a second mobile device.

Specifically, the encoding is not limited to be transmitted to one mobile device, it may also be transmitted to a plurality of mobile devices.

It should be illustrated that after transmitting the encoding information of the additional instruction information to which the additional instruction information corresponds to the second mobile device, the method further comprises:
receiving, by the second mobile device, the encoding information of the additional instruction information
inquiring, by the second mobile device, pre-stored second correspondence between additional instruction information and encoding information of additional instruction information, to obtain the encoding information to which the additional instruction information corresponds;
recognizing, by the second mobile device, the additional instruction information to further notify a second user of the second mobile device of the first user operation.

It should be illustrated that the second correspondence between encoding information of additional instruction information and additional instruction information may be stored in the first mobile device directly, or it may be stored in a server. If the first correspondence between encoding information of additional instruction information and additional instruction information, and the second correspondence between encoding information of additional instruction information and additional instruction information are both stored in a same server, then the second correspondence between encoding information of additional instruction information and additional instruction information may not be set and the first correspondence between encoding information of additional instruction information and additional instruction information may be employed directly. Thus optionally, inquiring, by the second mobile device, pre-stored second correspondence between additional instruction information and encoding information of additional instruction information, to obtain the encoding information to which the additional instruction information corresponds comprises: inquiring the second server, by the second mobile device, for pre-stored second correspondence between additional instruction information and encoding information of additional instruction information to obtain the encoding information to which the additional instruction information corresponds, or locally inquiring, by the second mobile device, pre-stored second correspondence between additional instruction information and encoding information of additional instruction information, to obtain the encoding information to which the additional instruction information corresponds. Wherein the first server and the second server may be one same server or be different servers, which would not be specifically defined in this embodiment.

It should be also illustrated that transmitting the encoding information of additional instruction information, to obtain the encoding information to which the additional instruction information corresponds to the second mobile device may specifically be:
transmitting the encoding information to which the additional instruction information corresponds to the server, and then the transmitting, by the server, the encoding information of additional instruction information to the second mobile device.

Further, upon the encoding information to which the additional instruction information corresponds is transmitted to the server, the server may convert the encoding information of additional instruction information into server unified coding sequence number for additional instruction information, then the server transmits the server unified coding sequence number for additional instruction information to the second mobile device. Accordingly, upon receiving the server unified coding sequence number for additional instruction information, the second mobile device needs to inquire pre-stored additional instruction information and unified coding sequence number for additional instruction information to obtain the additional instruction information.

The communication method for mobile devices described in embodiments of the invention may obtain additional instruction information that corresponds to a first user operation during communication by sensing the first user operation; transmit the additional instruction information to a second mobile device, such that only a voice-activated operation or a one-step operation is needed to be perform on the mobile device to obtain the additional instruction information; it does not need a user to open selections for input, it operations are simple and convenient and may improve communication efficiency of mobile devices. By inquiring pre-stored first correspondence between additional instruction information and encoding information of additional instruction information, the additional instruction information is transmitted to the second mobile device in manner of its encoding, its implementation is simple and convenient and may further improve communication efficiency of mobile devices.

### Embodiment 3

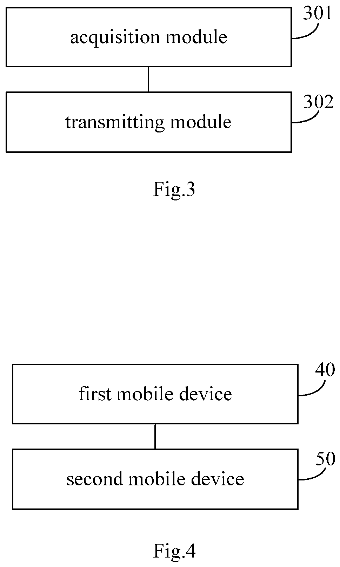

See Fig.3, embodiment of the present invention provides a communication apparatus for mobile devices, the apparatus comprises:
an acquisition module 301 for obtaining additional instruction information that corresponds to a first user operation during communication by sensing the first user operation; the first user operation comprises at least one of a voice-activated operation or a one-step operation on a first mobile device;
a transmitting module 302, for transmitting the additional instruction information to a second mobile device so that the second mobile device recognizes the additional instruction information to further notify a second user of the second mobile device of the first user operation, after the acquisition module 301 obtains the additional instruction information that corresponds to a first user operation.

Further, the transmitting module 302 comprises:
a first querying unit for inquiring pre-stored first correspondence between additional instruction information and encoding information of additional instruction information, to obtain the encoding information to which the additional instruction information corresponds;
a transmitting unit for transmitting the encoding information of the additional instruction information to the second mobile device, so as to make a second mobile device to: receive the encoding information of the additional instruction information, inquire pre-stored second correspondence between additional instruction information and encoding information of additional instruction information, to obtain the encoding information to which the additional instruction information corresponds; and recognize the additional instruction information to further notify a second user of the second mobile device of the first user operation.

Further, the one-step operation on the first mobile device comprises:
a one-step operation on a screen of the first mobile device, or
a one-step operation on the first mobile device itself.

The communication apparatus for mobile devices described in embodiments of the invention may obtain additional instruction information that corresponds to a first user operation during communication by sensing the first user operation; transmit the additional instruction information to a second mobile device, such that only a voice-activated operation or a one-step operation is needed to be perform on the mobile device to obtain the additional instruction information; it does not need a user to open selections for input, it operations are simple and convenient and may improve communication efficiency of mobile devices. By inquiring pre-stored first correspondence between additional instruction information and encoding information of additional instruction information, the additional instruction information is transmitted to the second mobile device in manner of its encoding, its implementation is simple and convenient and may further improve communication efficiency of mobile devices.

### Embodiment 4

See Fig.4, embodiment of the present invention provides a communication system for mobile devices; the system comprises a first mobile device 40 and a second mobile device 50.

The first mobile device 40 comprises:
an acquisition module for obtaining additional instruction information that corresponds to a first user operation during communication by sensing the first user operation; the first user operation comprises at least one of a voice-activated operation or a one-step operation on a first mobile device;
a transmitting module for transmitting the additional instruction information to a second mobile device after the acquisition module obtains the additional instruction information that corresponds to a first user operation.

The second mobile device 50 comprises:
a processing module for receiving the additional instruction information transmitted by the transmitting module, and recognizing the additional instruction information to further notify a second user of the second mobile device of the first user operation.

Further, the transmitting module 302 comprises:
a first querying unit for inquiring pre-stored first correspondence between additional instruction information and encoding information of additional instruction information, to obtain the encoding information to which the additional instruction information corresponds;
a transmitting unit for transmitting the encoding information of the additional instruction information to the second mobile device, after the first querying unit obtains the encoding information to which the additional instruction information corresponds.

Accordingly, the processing module comprises:
a receiving unit for receiving the additional instruction information transmitted by the transmitting module;
a second querying unit for inquiring pre-stored second correspondence between additional instruction information and encoding information of additional instruction information, to obtain the encoding information to which the additional instruction information corresponds;
a processing unit for recognizing the additional instruction information to further notify a second user of the second mobile device of the first user operation, after the second querying unit obtains the encoding information to which the additional instruction information corresponds.

The communication system for mobile devices described in embodiments of the invention may obtain additional instruction information that corresponds to a first user operation during communication by sensing the first user operation; transmit the additional instruction information to a second mobile device, such that only a voice-activated operation or a one-step operation is needed to be perform on the mobile device to obtain the additional instruction information; it does not need a user to open selections for input, it operations are simple and convenient and may improve communication efficiency of mobile devices. By inquiring pre-stored first correspondence between additional instruction information and encoding information of additional instruction information, the additional instruction information is transmitted to the second mobile device in manner of its encoding, its implementation is simple and convenient and may further improve communication efficiency of mobile devices.

Parts of all disclosure of the technical solution provided by the embodiments above may be implemented by software programming; the software program may be stored in readable storage medium such as hard drive, compact disc, floppy disk for computers.
The above described embodiments are merely preferred embodiments of the invention, but not intended to limit the invention.

## Claims

1. A communication method for mobile devices, comprising:
obtaining (201) additional instruction information corresponding to a first user operation on a first mobile device by sensing the first user operation, the first user operation comprising a voice-activated operation or a one-step operation,
obtaining (202) encoding information corresponding to the additional instruction information, by inquiring pre-stored first correspondence between additional instruction information and encoding information of additional instruction information; and
transmitting (203) the obtained encoding information to a second mobile device, enabling the second mobile device to notify a second user of the second mobile device of the first user operation based on the obtained encoding information, wherein
when the additional instruction information is an emoticon, encoding of the emoticon is set to be different with encodings of emoticons in existing chat tools, by defining a new set of emoticon fields and establishing a new set of correspondence between the emoticon and the encoding of the emoticon to define a marker start byte; and wherein
the marker start byte is an invisible byte to avoid a user from inputting an identical byte

2. The communication method according to claim 1, **characterized by** further comprising:
receiving, by the second mobile device, the obtained encoding information;
obtaining, by the second mobile device, the additional instruction information corresponding to the obtained encoding information, by inquiring, pre-stored second correspondence between additional instruction information and encoding information of the additional instruction information; and
notifying, by the second mobile device, a second user of the second mobile device of the first user operation, based on the additional instruction information corresponding to the obtained encoding information.

3. The communication method according to claim 1 or 2, **characterized in that** the first correspondence is pre-stored in the first mobile device itself or a first server communicating with the first mobile device, and the second correspondence is pre-stored in the second mobile device itself or a second server communicating with the

4. The communication method according to claim 3, **characterized in that**:
the first correspondence and the second correspondence are the same correspondence, and/or
the first server and the second server are the same server.

5. The communication method according to any of claims 1-4, **characterized in that** transmitting (203) the obtained encoding information to the second mobile device comprise:
transmitting the obtained encoding information to a server communicating with the first mobile device and the second mobile device;
converting, by the sever, the obtained encoding information into a server unified coding sequence number for additional instruction information; and
transmitting, by the sever, the server unified coding sequence number for additional instruction information to the second mobile device.

6. A communication apparatus for mobile devices, comprising:
an acquisition module (301) for obtaining additional instruction information corresponding to a first user operation on a first mobile device by sensing the first user operation, the first user operation comprising a voice-activated operation or a one-step operation,
a first querying unit for obtaining encoding information corresponding to the additional instruction information, by inquiring pre-stored first correspondence between additional instruction information and encoding information of additional instruction information; and
a transmitting unit for transmitting the obtained encoding information to a second mobile device, enabling the second mobile device to notify a second user of the second mobile device of the first user operation based on the obtained encoding information, wherein
when the additional instruction information is an emoticon, encoding of the emoticon is set to be different with encodings of emoticons in existing chat tools, by defining a new set of emoticon fields and establishing a new set of correspondence between the emoticon and the encoding of the emoticon to define a marker start byte; and wherein
the marker start byte is an invisible byte to avoid a user from inputting an identical byte.

7. The communication apparatus according to claim 6, **characterized in that** transmitting the obtained encoding information to the second mobile device comprise:
transmitting the obtained encoding information to a server communicating with the first mobile device and the second mobile device;
converting, by the sever, the obtained encoding information into a server unified coding sequence number for additional instruction information; and
transmitting, by the sever, the server unified coding sequence number for additional instruction information to the second mobile device.

8. The communication apparatus according to any of claims 6or 7, **characterized in that** the first correspondence is pre-stored in the first mobile device itself or a first server communicating with the first mobile device.

9. A recording medium readable by a computer and having recorded thereon a computer program including instructions for executing the steps of the communication method for mobile devices according to any one of claims 1 to 5.

## Patentansprüche

1. Kommunikationsverfahren für mobile Geräte, umfassend:
Erhalten (201) zusätzlicher Anweisungsinformation, die einem ersten Benutzervorgang auf einem ersten mobilen Gerät entspricht, durch Erfassen des ersten Benutzervorgangs, wobei der erste Benutzervorgang einen sprachaktivierten Vorgang oder einen Ein-Schritt-Vorgang umfasst,
Erhalten (202) von Kodierungsinformation, die der zusätzlichen Anweisungsinformation entspricht, durch Abfragen einer vorgespeicherten ersten Entsprechung zwischen zusätzlicher Anweisungsinformation und Kodierungsinformation zusätzlicher Anweisungsinformation; und
Senden (203) der erhaltenen Kodierungsinformation an ein zweites mobiles Gerät, wodurch das zweite mobile Gerät in die Lage versetzt wird, einen zweiten Benutzer des zweiten mobilen Geräts über den ersten Benutzervorgang auf der Grundlage der erhaltenen Kodierungsinformation zu benachrichtigen, wobei
wenn die zusätzliche Anweisungsinformation ein Emoticon ist, die Kodierung des Emoticons so eingestellt wird, dass sie sich von der Kodierung von Emoticons in bestehenden Chat-Hilfsmitteln unterscheidet, indem ein neuer Satz von Emoticon-Feldern definiert und ein neuer Satz von Entsprechungen zwischen dem Emoticon und der Kodierung des Emoticons festgelegt wird, um ein Markierungsstartbyte zu definieren; und wobei
das Markierungsstartbyte ein unsichtbares Byte ist, um zu verhindern, dass ein Benutzer ein identisches Byte eingibt

2. Kommunikationsverfahren nach Anspruch 1, **dadurch gekennzeichnet, dass** es weiter umfasst:
Empfangen der erhaltenen Kodierungsinformation durch das zweite mobile Gerät;
Erhalten, durch das zweite mobile Gerät, der zusätzlichen Anweisungsinformation, die der erhaltenen Kodierungsinformation entspricht, durch Abfragen einer vorher gespeicherten zweiten Entsprechung zwischen zusätzlicher Anweisungsinformation und Kodierungsinformation der zusätzlichen Anweisungsinformation; und
Benachrichtigen eines zweiten Benutzers des zweiten mobilen Geräts durch das zweite mobile Gerät über den ersten Benutzervorgang auf der Grundlage der zusätzlichen Anweisungsinformation, die der erhaltenen Kodierungsinformation entspricht.

3. Kommunikationsverfahren nach Anspruch 1 oder 2, **dadurch gekennzeichnet, dass** die erste Entsprechung in dem ersten mobilen Gerät selbst oder einem ersten Server, der mit dem ersten mobilen Gerät kommuniziert, und die zweite Entsprechung in dem zweiten mobilen Gerät selbst oder einem zweiten Server, der mit dem zweiten mobilen Gerät kommuniziert, vorgespeichert ist.

4. Kommunikationsverfahren nach Anspruch 3, **dadurch gekennzeichnet, dass**:
die erste Entsprechung und die zweite Entsprechung die gleiche Entsprechung sind, und/oder
der erste Server und der zweite Server derselbe Server sind.

5. Kommunikationsverfahren nach einem der Ansprüche 1-4, **dadurch gekennzeichnet, dass** Senden (203) der erhaltenen Kodierungsinformation an das zweite mobile Gerät umfasst:
Senden der erhaltenen Kodierungsinformation an einen Server, der mit dem ersten mobilen Gerät und dem zweiten mobilen Gerät kommuniziert;
Konvertieren der erhaltenen Kodierungsinformation durch den Server in eine serverseitig einheitliche Kodierungssequenznummer für zusätzliche Anweisungsinformation; und
Senden der einheitlichen Kodierungssequenznummer für zusätzliche Anweisungsinformation vom Server an das zweite mobile Gerät durch den Server.

6. Kommunikationsvorrichtung für mobile Geräte, umfassend:
ein Erfassungsmodul (301) zum Erhalten zusätzlicher Anweisungsinformation, die einem ersten Benutzervorgang auf einem ersten mobilen Gerät entspricht, durch Erfassen des ersten Benutzervorgangs, wobei der erste Benutzervorgang einen sprachaktivierten Vorgang oder einen Ein-Schritt-Vorgang umfasst,
eine erste Abfrageeinheit zum Erhalten von Kodierungsinformation, die der zusätzlichen Anweisungsinformation entspricht, durch Abfragen einer vorab gespeicherten ersten Entsprechung zwischen zusätzlicher Anweisungsinformation und Kodierungsinformation von zusätzlicher Anweisungsinformation; und
eine Sendeinheit zum Senden der erhaltenen Kodierungsinformation an ein zweites mobiles Gerät, wodurch das zweite mobile Gerät in die Lage versetzt wird, einen zweiten Benutzer des zweiten mobilen Geräts über den ersten Benutzervorgang auf der Grundlage der erhaltenen Kodierungsinformation zu benachrichtigen, wobei
wenn die zusätzliche Anweisungsinformation ein Emoticon ist, die Kodierung des Emoticons so eingestellt wird, dass sie sich von der Kodierung von Emoticons in bestehenden Chat-Hilfsmitteln unterscheidet, indem ein neuer Satz von Emoticon-Feldern definiert und ein neuer Satz von Entsprechungen zwischen dem Emoticon und der Kodierung des Emoticons festgelegt wird, um ein Markierungsstartbyte zu definieren; und wobei
das Markierungsstartbyte ein unsichtbares Byte ist, um zu verhindern, dass ein Benutzer ein identisches Byte eingibt.

7. Kommunikationsvorrichtung nach Anspruch 6, **dadurch gekennzeichnet, dass** das Senden der erhaltenen Kodierungsinformation an das zweite mobile Gerät umfasst:
Senden der erhaltenen Kodierungsinformation an einen Server, der mit dem ersten mobilen Gerät und dem zweiten mobilen Gerät kommuniziert;
Konvertieren der erhaltenen Kodierungsinformation durch den Server in eine serverseitig einheitliche Kodierungssequenznummer für zusätzliche Anweisungsinformation; und
Senden der einheitlichen Kodierungssequenznummer für zusätzliche Anweisungsinformation vom Server an das zweite mobile Gerät durch den Server.

8. Kommunikationsvorrichtung nach einem der Ansprüche 6 oder 7, **dadurch gekennzeichnet, dass** die erste Entsprechung im ersten mobilen Gerät selbst oder in einem ersten Server, der mit dem ersten mobilen Gerät kommuniziert, vorgespeichert ist.

9. Aufzeichnungsmedium, das von einem Computer lesbar ist und auf dem ein Computerprogramm aufgezeichnet ist, das Anweisungen zum Ausführen der Schritte des Kommunikationsverfahrens für mobile Geräte nach einem der Ansprüche 1 bis 5 enthält.

## Revendications

1. Procédé de communication pour dispositifs mobiles, consistant à :
obtenir (201) des informations d'instruction supplémentaires correspondant à une opération d'un premier utilisateur sur un premier dispositif mobile par détection de l'opération du premier utilisateur, l'opération du premier utilisateur comprenant une opération activée par la voix ou une opération à une étape,
obtenir (202) des informations de codage correspondant aux informations d'instruction supplémentaires, par demande d'une première correspondance mémorisée au préalable entre les informations d'instruction supplémentaire et les informations de codage des informations d'instruction supplémentaires ; et
transmettre (203) les informations de codage obtenues à un second dispositif mobile permettant au second dispositif mobile de notifier un second utilisateur du second dispositif mobile de l'opération du premier utilisateur sur base des informations de codage obtenues,
lorsque les informations d'instructions supplémentaires sont une émoticône, le codage de l'émoticône étant défini comme étant différent des codages d'émoticônes dans des outils de bavardage existants, par définition d'un nouvel ensemble de champs d'émoticône et par établissement d'un nouvel ensemble de correspondance entre l'émoticône et le codage de l'émoticône pour définir un octet de début de marqueur ; et
l'octet de début de marqueur étant un octet invisible pour éviter à un utilisateur d'entrer un octet identique

2. Procédé de communication selon la revendication 1, **caractérisé en ce qu'**il consiste en outre à :
recevoir, par le second dispositif mobile, les informations de codage obtenues ;
obtenir, par le second dispositif mobile, les informations d'instruction supplémentaires correspondant aux informations de codage obtenues, par demande de seconde correspondance mémorisée au préalable entre les informations d'instruction supplémentaire et les informations de codage des informations d'instruction supplémentaires ; et
notifier, par le second dispositif mobile, un second utilisateur du second dispositif mobile de l'opération du premier utilisateur, sur la base des informations d'instruction supplémentaires correspondant aux informations de codage obtenues.

3. Procédé de communication selon la revendication 1 ou la revendication 2, **caractérisé en ce que** la première correspondance étant mémorisée au préalable dans le premier dispositif mobile lui-même ou dans un premier serveur en communication avec le premier dispositif mobile, et la seconde correspondance étant mémorisée au préalable dans le second dispositif mobile lui-même ou dans un second serveur en communication avec le second dispositif mobile.

4. Procédé de communication selon la revendication 3, **caractérisé en ce que** :
la première correspondance et la second correspondance sont la même correspondance, et/ou
le premier serveur et le second serveur sont le même serveur.

5. Procédé de communication selon l'une quelconque des revendications 1 à 4, **caractérisé en ce que** la transmission (203) des informations de codage obtenues au second dispositif mobile consiste à :
transmettre les informations de codage obtenues au serveur en communication avec le premier dispositif mobile et le second dispositif mobile ;
convertir, par le serveur, les informations de codage obtenues en un nombre de séquence de codage unifié de serveur pour les informations d'instruction supplémentaires ; et
transmettre, par le serveur, le nombre de séquence de codage unifié de serveur pour les informations d'instruction supplémentaires au second dispositif mobile.

6. Appareil de communication pour dispositifs mobiles, comprenant :
un module d'acquisition (301) pour obtenir des informations d'instruction supplémentaires correspondant à une opération d'un premier utilisateur sur un premier dispositif mobile par détection de l'opération du premier utilisateur, l'opération du premier utilisateur comprenant une opération activée par la voix ou une opération à une étape,
une première unité de demande pour obtenir des informations de codage correspondant aux informations d'instruction supplémentaires, par demande d'une première correspondance mémorisée au préalable entre les informations d'instruction supplémentaire et les informations de codage des informations d'instruction supplémentaires ; et
une unité de transmission pour transmettre les informations de codage obtenues à un second dispositif mobile permettant au second dispositif mobile de notifier un second utilisateur du second dispositif mobile de l'opération du premier utilisateur sur base des informations de codage obtenues,
lorsque les informations d'instructions supplémentaires sont une émoticône, le codage de l'émoticône étant défini comme étant différent des codages d'émoticônes dans des outils de dialogue en ligne existants, par définition d'un nouvel ensemble de champs d'émoticône et par établissement d'un nouvel ensemble de correspondance entre l'émoticône et le codage de l'émoticône pour définir un octet de début de marqueur ; et
l'octet de début de marqueur étant un octet invisible pour éviter à un utilisateur d'entrer un octet identique.

7. Appareil de communication selon la revendication 6, **caractérisé en ce que** la transmission des informations de codage obtenues au second dispositif mobile consiste à :
transmettre les informations de codage obtenues au serveur en communication avec le premier dispositif mobile et le second dispositif mobile ;
convertir, par le serveur, les informations de codage obtenues en un nombre de séquence de codage unifié de serveur pour les informations d'instruction supplémentaires ; et
transmettre, par le serveur, le nombre de séquence de codage unifié de serveur pour les informations d'instruction supplémentaires au second dispositif mobile.

8. Appareil de communication selon l'une quelconque des revendications 6 ou 7, **caractérisé en ce que** la première correspondance est mémorisée au préalable dans le premier dispositif mobile lui-même ou dans un premier serveur en communication avec le premier dispositif mobile.

9. Support d'enregistrement lisible par un ordinateur et sur lequel a été enregistré un programme informatique comprenant les instructions pour exécuter les étapes du procédé de communication pour les dispositifs mobiles selon l'une quelconque des revendications 1 à 5.
